# EUROPÄISCHE PATENTSCHRIFT

(11) **EP 3 552 681 B1**
(45) Veröffentlichungstag und Bekanntmachung des Hinweises auf die Patenterteilung: **20.01.2021**
(21) Anmeldenummer: 19166032.3
(22) Anmeldetag: 29.03.2019
(51) Int. Cl.: B01D 35/147, B01D 29/21, B01D 29/60

(54) **FILTERELEMENT FÜR DIE ÖLFILTRATION**
FILTER ELEMENT FOR OIL FILTRATION
ÉLÉMENT FILTRANT POUR LA FILTRATION D'HUILE

(30) Priorität: 12.04.2018 DE 102018002974
(43) Veröffentlichungstag der Anmeldung: 16.10.2019
(73) Patentinhaber: HYDAC FluidCareCenter GmbH, 66280 Sulzbach/Saar (DE)
(72) Erfinder: Kleemann, Daniel, 57515 Alsting (FR); Nenno, Alexander, 66606 St. Wendel (DE); Schneider, André Michael, 66399 Mandelbachtal (DE)
(74) Vertreter: Bartels und Partner, Patentanwälte

(56) Entgegenhaltungen:
- EP-A1- 1 403 475
- DE-A1-102004 046 580
- DE-A1-102015 200 085
- DE-A1-102016 202 283
- US-A- 4 388 196
- US-A1- 2013 306 531

## Beschreibung

Die Erfindung betrifft ein Filterelement für die Filtration von Getriebeölen, mit den Merkmalen im Oberbegriff des Anspruchs 1.

Beim Betrieb von technischen Einrichtungen, bei denen Filterelemente zur Filtration von Ölen, wie Hydrauliköl, Motoröl oder Getriebeöl, zum Einsatz kommen, ergeben sich Betriebsphasen, die unter unterschiedlichen Temperaturbedingungen ablaufen. Die sich hierbei ergebenden Viskositätsänderungen zwischen niedrigen Kaltstarttemperaturen und wesentlich höheren Betriebstemperaturen führen unabhängig vom Betriebszustand des Filtermaterials des betreffenden Filterelements, also ob funktionsfähig oder verblockt, zu hohen, am Filtermaterial wirkenden Differenzdrücken. In Kaltstartphasen kann es daher bei der hohen Viskosität des Öls auch bei funktionsfähigem Filterelement zu Druckbelastungen kommen, die das Filtermaterial beeinträchtigen oder schädigen. Im Hinblick auf diese Problematik ist im Dokument WO 01/55563 A2 ein Ölfilter für Motoren, Getriebe oder Automatikgetriebe, offenbart, der ein Bypassventil aufweist, dessen Öffnungsdruck temperaturgesteuert veränderlich ist. Hierfür sieht die bekannte Lösung ein Bypassventil mit einem Schließkörper vor, der durch eine Schließfeder belastet ist, deren Federhärte sich abhängig von der Temperatur in der Weise verändert, dass bei niedrigen Kaltstartbedingungen die Federhärte gering und bei höherer Temperatur, wie der Betriebstemperatur, härter ist.

Durch den bei niedriger Temperatur verringerten Öffnungsdruck ist die Gefahr der Überbelastung des Filtermaterials bei Kaltstartphasen vermieden. Die bekannte Lösung ist jedoch in mehrerer Hinsicht nachteilig.

Die temperaturabhängig wirksame Schließfeder besteht aus einer Formgedächtnislegierung. Bei Formgedächtnislegierungen handelt es sich um metallische Werkstoffe, deren mechanische Eigenschaften durch Temperatureinfluss veränderbar sind. Dieser Effekt beruht auf einer reversiblen Umkehr zwischen austenitischer und martensitischer Kristallstruktur bei einer Umwandlungstemperatur. Die Beschaffung geeigneter Legierungen verursacht verhältnismäßig hohe Werkstoffkosten und führt zu entsprechend hohen Herstellungskosten. Die Federcharakteristik muss, unter anderem durch Wahl der Legierungsbestandteile, auf die Funktionsanforderungen für den jeweiligen Einsatzfall abgestimmt werden. Dies bedeutet einen erheblichen Fertigungsaufwand, der zu einer zusätzlichen Erhöhung der Herstellkosten führt. Ein weiterer Nachteil der bekannten Lösung besteht darin, dass die Ventilbauweise mit einem in einem Ventilgehäuse geführten Ventilkörper, der durch eine seinen Ventilschaft umgebende Schließfeder belastet ist, einen verhältnismäßig großen Bauraum beansprucht. Da für Ölfilter, die für den Einbau in den Ölsumpf von Getriebegehäusen oder Ölwannen vorgesehen sind, nur ein begrenzter Einbauraum zur Verfügung steht und daher für in Frage kommende Filter eine besonders flache Bauweise anzustreben ist, erschwert die Bauweise des Bypassventils der bekannten Lösung den Einsatz für die vorgesehene Ölfiltration.

Ausgehend von diesem Stand der Technik stellt sich die Erfindung die Aufgabe, ein Filterelement der eingangs genannten Gattung zur Verfügung zu stellen, das sich nicht nur durch geringe Herstellkosten auszeichnet, sondern für die Filtration von Getriebeölen mit besonderem Vorteil einsetzbar ist.

Die US 4 388 196 offenbart ein Filterelement für die Filtration von Getriebeölen, mit einem von Deckteilen eingefassten Filtermaterial, das beim Filtrationsvorgang eine Unfiltratseite von einer Filtratseite trennt, und mit einem Bypassventil, das einen Schließkörper aufweist, der temperaturgesteuert einen das Filtermaterial umgehenden Fluidweg zwischen Unfiltrat- und Filtratseite schließt oder freigibt, wobei der Schließkörper durch ein temperatursensitives Bauteil gebildet ist, das in Abhängigkeit von der Temperatur in erste und zweite Formzustände gelangt, in denen es den umgehenden Fluidweg schließt bzw. freigibt, wobei der temperatursensitive Schließkörper als Bimetallelement ausgebildet ist, welches zumindest in einem Ausgangs-Formzustand vom zu filtrierenden Öl zumindest teilweise umströmt ist, und wobei das Bimetallelement konzentrisch zur Durchgangsöffnung angeordnet ist und sich gleichförmig und radialsymmetrisch zur Symmetrieachse von Durchgangsöffnung und Bimetallelement verformt.

Die DE 10 2015 200 085 A1, die EP 1 403 475 A1, die US 2013/0306531 A1 und die DE 10 2016 202 283 A1 beschreiben weitere Filterelemente.

Erfindungsgemäß ist diese Aufgabe durch ein Filterelement gelöst, das die Merkmale des Patentanspruchs 1 in seiner Gesamtheit aufweist.

Gemäß dem kennzeichnenden Teil des Patentanspruchs 1 ist die Erfindung dadurch gekennzeichnet, dass das Bimetallelement derart am oder im Filtergehäuse angeordnet ist, dass es im Ausgangszustand einen Öldurchfluss durch mindestens eine dem Fluidweg zugeordnete Durchgangsöffnung ermöglicht und beim Verformen den Öldurchfluss reduziert, und dass die Materialien für das Bimetallelement derart gewählt sind, dass bei Übersteigen eines vorgebbaren Schwellwertes für die Öltemperatur ein Verformen des Bimetallelements vom Ausgangszustand aus zum Sperren des Fluidweges beginnt.

Ferner ist vorgesehen, dass der Schließkörper des Bypassventils durch ein temperatursensitives Bauteil gebildet ist, das in Abhängigkeit von der Temperatur Formzustände einnimmt, in denen es den das Filtermaterial umgehenden Fluidweg schließt oder freigibt. Der Schließkörper selbst übernimmt dadurch nicht nur die eigentliche Ventilfunktion Schließen/Freigeben, sondern auch die Funktion der temperaturabhängigen Steuerung des Bypassventils. Die beim Stand der Technik vorgesehenen temperatursensitiven Bauelemente, die zur Steuerung des Schließkörpers mit diesem mechanisch gekoppelt sind, kommen dadurch in Wegfall, etwa in Form der aus einer Formgedächtnislegierung bestehenden Schließfeder. Gegenüber den bekannten Feder-Schließkolben-Systemen verringert sich nicht nur die Anzahl der für das Bypassventil erforderlichen Bauteile, sondern die vereinfachte Bauweise ermöglicht in Verbindung mit geringeren anfallenden Werkstoffkosten auch eine erhebliche Reduzierung der Herstellkosten. Durch die erreichte vereinfachte und kompakte Bauweise des Bypassventils ist das erfindungsgemäße Filterelement auch besonders vorteilhaft für den Einbau in Getriebeölwannen geeignet.

Mit besonderem Vorteil kann das Bimetallelement scheiben-, teller- oder plattenförmig ausgebildet sein.

Bei besonders vorteilhaften Ausführungsbeispielen kommt das Bimetallelement zum Sperren des Fluidweges zumindest teilweise in Anlage mit die Durchgangsöffnung begrenzenden Filtergehäuseteilen.

Mit Vorteil ist die Anordnung derart getroffen, dass das teller- oder scheibenförmige Bimetallelement sich vom Ausgangszustand aus gleichförmig und radialsymmetrisch zur Symmetrieachse von Durchgangsöffnung und Bimetallelement verformt. Bei dieser Anordnung ist an der Durchgangsöffnung eine Art Plattenventil gebildet.

Mit Vorteil kann das Bimetallelement randseitig ortsfest am oder im Filtergehäuse angeordnet sein, vorzugsweise an in regelmäßigen Abständen am Rand des Bimetallelements vorgesehenen Befestigungspunkten.

Bei vorteilhaften Ausführungsbeispielen ist das Bimetallelement am jeweiligen Befestigungspunkt mit seinem Rand in ein Halteteil eingesetzt, eingeschoben oder eingerastet, wobei die Halteteile den Fluidweg zumindest teilweise umgeben.

Mit besonderem Vorteil können hierbei Materialien, Form und Anordnung des Bimetallelements derart gewählt sein, dass es bis zu einem Sperrzustand verformbar, insbesondere verbiegbar, ist, in welchem eine größtmögliche Sperrung des Fluidweges erreicht ist.

Bei besonders vorteilhaften Ausführungsbeispielen ist das Bimetallelement an einem der Deckteile, vorzugsweise am in Gebrauchsstellung unteren Deckteil, angeordnet, wobei das Bimetallelement vorzugsweise zumindest im Ausgangszustand über die Außenseite des Deckteils, besonders bevorzugt mit einer Wölbung, übersteht.

Bei besonders bevorzugten Ausführungsbeispielen umgibt das Filtermaterial in Form eines Hohlkörpers einen inneren, vorzugsweise hohlzylinderförmigen, Filterhohlraum, der zwischen den Deckteilen angeordnet ist, die die Einfassung für die Stirnseiten des Hohlkörpers des Filtermaterials bilden, wobei der Filterhohlraum die Filtratseite bildet und das Bypassventil, vorzugsweise in Form des Bimetallelements, an einer Durchgangsöffnung am oberen oder unteren Deckteil in auf den Filterhohlraum ausgerichteter Lage angeordnet ist.

Nachstehend ist die Beschreibung anhand eines in der Zeichnung dargestellten Ausführungsbeispiels im Einzelnen erläutert. Es zeigen:
- Fig. 1: einen Längsschnitt des Ausführungsbeispiels des erfindungsgemäßen Filterelements, wobei der Zustand bei Kaltstartbedingungen dargestellt ist;
- Fig. 2: eine perspektivische Schrägansicht, die in zentraler Längsebene und einer hierzu senkrechten Querebene aufgeschnitten gezeichnet ist, wobei ebenfalls der Betriebszustand bei Kaltstartbedingungen dargestellt ist;
- Fig. 3: einen der Fig. 1 entsprechenden Längsschnitt des Ausführungsbeispiels, wobei der Betriebszustand bei Betriebstemperatur dargestellt ist; und
- Fig. 4: eine der Fig. 2 entsprechend aufgeschnitten gezeichnete perspektivische Schrägansicht, wobei der Betriebszustand bei Betriebstemperatur dargestellt ist.

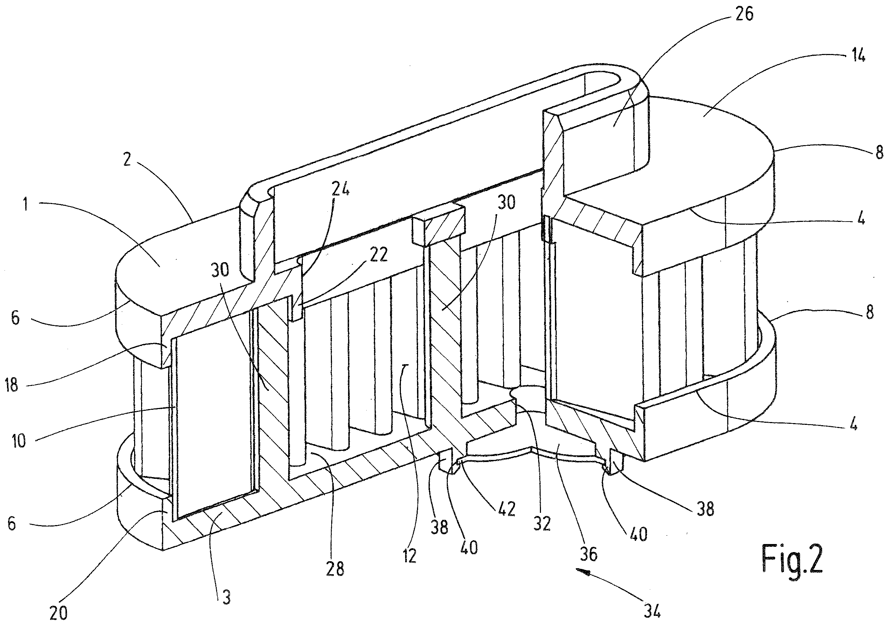

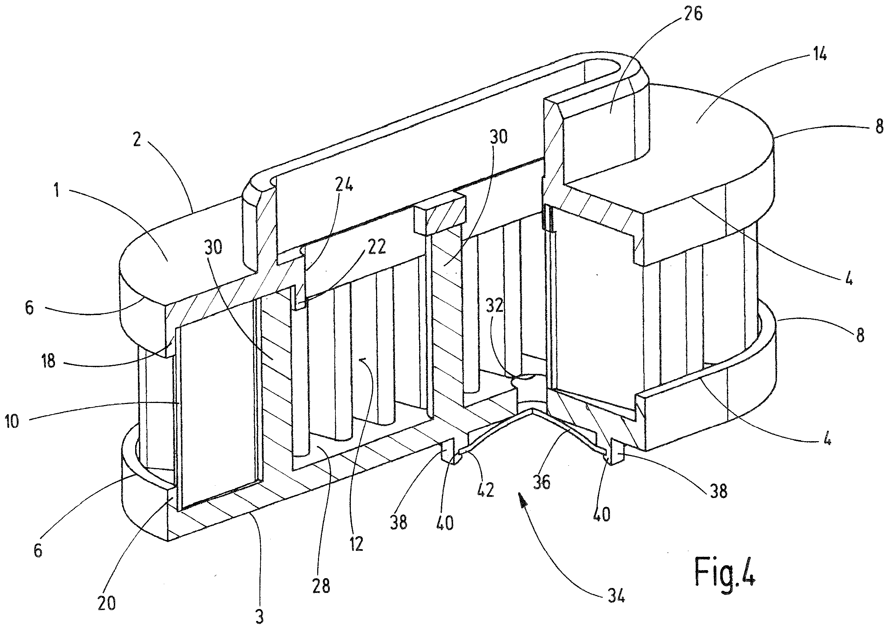

Das in der Zeichnung dargestellte Ausführungsbeispiel des erfindungsgemäßen Filterelements besitzt eine unrunde, flache Form, die im großen Ganzen einem langgestreckten Rechteck in kreisbogenförmigen Schmalseiten entspricht. Oberer und unterer Abschluss sind durch ein oberes Deckteil 1 und ein unteres Deckteil 3 gebildet, die eine langgestreckte Form mit je gleichem Umriss besitzen, mit zwei zueinander parallelen Langseiten 2 und 4 und kreisbogenförmig gerundeten Schmalseiten 6 und 8, s. Fig. 2 und 4. Die Deckteile 1 und 3, die jedes aus einem Kunststoffwerkstoff einteilig spritzgeformt sind, bilden die endkappenartige Einfassung für ein Filtermaterial 10, das dem Stand der Technik entsprechend aus einer mehrlagigen, plissierten Filtermatte gebildet ist. Diese bildet einen Hohlkörper, der einen inneren Filterhohlraum 12 umgibt und der eine unrunde Form in Entsprechung zu dem unrunden Umriss der Deckteile 1 und 3 besitzt. Diese weisen zur Bildung der endkappenartigen Einfassung der Stirnseiten des Hohlkörpers des Filtermaterials 10 einen Umfangsrand 18 bzw. 20 auf, die aus der Ebene der flachen Außenseiten 14 und 16 von oberem und unterem Deckteil 1 bzw. 3 im rechten Winkel gegeneinander vorstehen. Am oberen Deckteil 1 befindet sich ein wie der Außenrand 18 abgewinkelter, nach innen vorstehender Innenrand 22, der eine langgestreckte Öffnung 24 des oberen Deckteils 1 umgibt. Diese bildet beim Filtrationsvorgang den Ausgang aus dem die Filtratseite bildenden Filterhohlraum 12, der zu einem Sauganschluss führt. Dieser ist durch einen an der Außenseite 14 befindlichen, flachrohrartigen Anschlusskörper 26 gebildet.

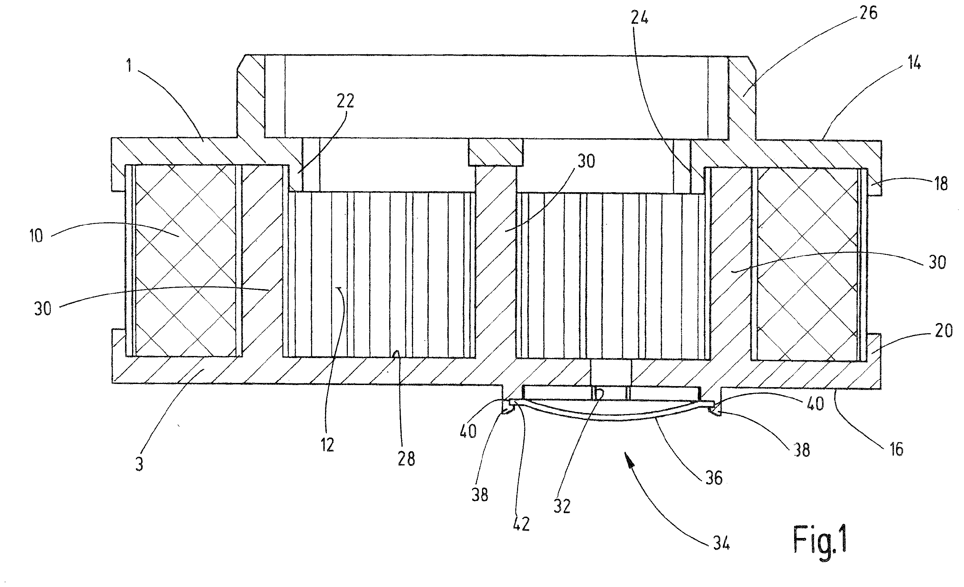

Zur Bildung eines festen Verbundes zwischen den Deckteilen 1 und 3 weist das untere Deckteil 3 aus seiner ebenen, inneren Bodenfläche 28 senkrecht nach oben vorstehende Verbindungsleisten 30 auf, die um den inneren Umfang des Hohlkörpers des Filtermaterials 10 verteilt angeordnet sind und mit ihren oberen Enden mit dem oberen Deckteil 1 verklebt oder verschweißt sind. Im unteren Deckteil 3 befindet sich ein Durchgang 32, der, wie Fig. 1 und 2 zeigen, in aus der Mitte nach rechts versetzter Anordnung angeordnet ist und an der Bodenfläche 28 in den inneren Filterhohlraum 12 einmündet. Der bei der Funktionsposition des Filterelements in einen Ölsumpf eingetauchte Durchgang 32 ist mittels eines temperaturabhängig wirkenden Bypassventils 34 verschließbar oder freigebbar. Das Bypassventil 34 weist als Ventil-Schließglied ein Bimetallelement in Form einer kreisrunden, flachen Scheibe 36 auf. Als Halterung für die Scheibe 36 sind an der Unterseite des unteren Deckteils 3 nach unten vorstehende Halteteile 38 angeformt, von denen vier in gleichem Abstand um den Durchgang 32 verteilt angeordnet sind. Die Halteteile 38 weisen je eine nutartige Vertiefung 40 auf, in die die Scheibe 36 mit ihrem Rand 42 eingerastet ist.

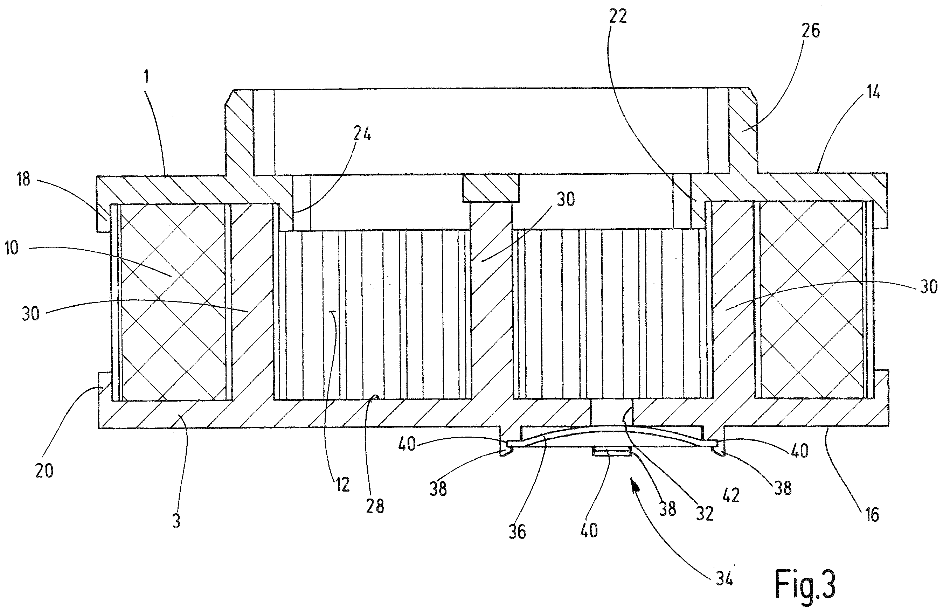

Das Bimetallelement in Form der kreisrunden Scheibe 36 besitzt eine tellerartig gewölbte Form, wobei sie je nach herrschender Temperatur aus der durch den Scheibenrand 42 verlaufenden Ebene heraus nach der einen Seite oder der anderen Seite hin ausgewölbt ist. Die Fig. 1 zeigt den Wölbungsverlauf der Scheibe 36 nach unten bei einer niedrigen Temperatur, die der Öltemperatur bei Kaltstartphasen entspricht. Die Fig. 3 zeigt die Wölbung der Scheibe 36 nach oben bei einem höheren Temperaturniveau, wie der Betriebstemperatur des zu filtrierenden Öls. Die Fig. 1 und 2 zeigen den Betriebszustand während der Kaltstartphase, bei der die Scheibe 36 nach unten gewölbt ist, so dass das Bypassventil 34 den Durchgang 32 freigibt. Über den in den Ölsumpf eingetauchten Durchgang 32 ist dadurch ein das Filtermaterial 10 umgehender Fluidweg zu dem die Filtratseite bildenden inneren Filterhohlraum 12 hin und über die Öffnung 24 des oberen Deckteils 1 zum Sauganschluss 26 frei.

Die Fig. 3 und 4 zeigen den Betriebszustand bei einem oberhalb eines Schwellenwerts liegender Öltemperatur, wie der Betriebstemperatur. Die Scheibe 36 des Bimetallelements ist so ausgelegt, dass sie bei Erreichen dieser Temperaturschwelle aus der nach unten gewölbten Form (Fig. 1 und 2) in die in Fig. 3 und 4 gezeigte, nach oben gewölbte Form übergeht. Wie in diesen Figuren gezeigt, liegt die Scheibe 36 nun als Ventil-Schließglied am Öffnungsrand des Durchgangs 32 an. Bei dadurch geschlossenem Bypass durchströmt das zu filtrierende Öl das Filtermaterial 10 von der zwischen oberem Deckteil 1 und unterem Deckteil 3 freiliegenden Außenseite her zur Filtratseite im inneren Hohlraum 12 und gelangt aus diesem als Fil-trat zum Sauganschluss 26. Bimetallelemente, wie die Scheibe 36, lassen sich so auslegen, dass sie in der Art eines Schnappelements beim Schwellenwert der Temperatur sprunghaft von der einen Wölbung zur anderen Wölbung übergehen. Des Weiteren können die Höhe der Halteteile 38 und der Abstand der Vertiefungen 40 von der Unterseite des unteren Deckteils so gewählt sein, dass die Scheibe 36 bei der Wölbung nach oben am Rand des Durchgangs 32 anliegt, bevor die Scheibe 36 ihre Endwölbung erreicht.

Dadurch liegt die Scheibe 36 mit einer verbleibenden, elastischen Restspannung als Schließglied am Durchgang 32 an.

Das vorstehend beschriebene Filterelement kann zusätzlich neben der Partikelabtrennung aus Fluiden auch der Entgasung von solchen Fluiden dienen. Dergestalt lassen sich gasförmige Belastungen, wie Luft, aus Hydraulikmedien, wie Getriebeöl, entfernen. Für die dahingehende Entgasung kann mit Vorteil das Elementmaterial des Filterelementes durch ein mehrlagiges, plisseeartig gefaltetes Filtermaterial gebildet sein, bei dem zumindest eine Lage mit koalisierender Eigenschaft vorgesehen ist. Bei dieser kann es sich um ein maschenbildendes Gewebe aus Edelstahldraht handeln, das gasförmige Bestandteile des Öls zu Gasbläschen koaguliert, die im Öl aufsteigen und sich derart separieren. Für das Gewebe können neben einer Köperbindung auch andere Bindungsarten vorgesehen sein, wie auch maschenbildende Strukturen, in Form von gewirken oder gestrickten Geweben. Eine effektive Koaleszerwirkung und eine daraus resultierende wirksame Entgasung ergeben sich hierbei durch eine geeignete Wahl der Maschenweite. Weiterhin kann zur Begünstigung der Koaleszerwirkung die Oberfläche der Drähte der Gewebe mit einer Strukturierung versehen sein, beispielsweise durch Anätzen oder Anschleifen, gebildet. Eine entprechende Wirkung kann auch durch eine Oberflächenbeschichtung der Drähte erreicht werden.

## Patentansprüche

1. Filterelement für die Filtration von Getriebeölen, mit einem von Deckteilen (1, 3) eingefassten Filtermaterial (10), das beim Filtrationsvorgang eine Unfiltratseite von einer Filtratseite (12) trennt, und mit einem Bypassventil (34), das einen Schließkörper (36) aufweist, der temperaturgesteuert einen das Filtermaterial (10) umgehenden Fluidweg zwischen Unfiltrat- und Filtratseite (12) schließt oder freigibt, wobei der Schließkörper durch ein temperatursensitives Bauteil (36) gebildet ist, das in Abhängigkeit von der Temperatur in erste und zweite Formzustände gelangt, in denen es den umgehenden Fluidweg schließt bzw. freigibt, wobei der temperatursensitive Schließkörper als Bimetallelement (36) ausgebildet ist, welches zumindest in einem Ausgangs-Formzustand vom zu filtrierenden Öl zumindest teilweise umströmt ist, und wobei das Bimetallelement (36) konzentrisch zur Durchgangsöffnung (32) angeordnet ist und sich gleichförmig und radialsymmetrisch zur Symmetrieachse von Durchgangsöffnung (32) und Bimetallelement (36) verformt, **dadurch gekennzeichnet, dass** das Bimetallelement (36) derart am oder im Filtergehäuse angeordnet ist, dass es im Ausgangszustand einen Öldurchfluss durch mindestens eine dem Fluidweg zugeordnete Durchgangsöffnung (32) ermöglicht und beim Verformen den Öldurchfluss reduziert, und dass die Materialien für das Bimetallelement (36) derart gewählt sind, dass bei Übersteigen eines vorgebbaren Schwellwertes für die Öltemperatur ein Verformen des Bimetallelements (36) vom Ausgangszustand aus zum Sperren des Fluidweges beginnt.

2. Filterelement nach Anspruch 1, **dadurch gekennzeichnet, dass** das Bimetallelement (36) scheiben-, teller- oder plattenförmig ausgebildet ist.

3. Filterelement nach Anspruch 1 oder 2, **dadurch gekennzeichnet, dass** das Bimetallelement (36) zum Sperren des Fluidweges zumindest teilweise in Anlage mit die Durchgangsöffnung (32) begrenzenden Filtergehäuseteilen kommt.

4. Filterelement nach einem der vorhergehenden Ansprüche, **dadurch gekennzeichnet, dass** das Bimetallelement (36) randseitig ortsfest am oder im Filtergehäuse angeordnet ist, vorzugsweise an in regelmäßigen Abständen am Rand des Bimetallelements (36) vorgesehenen Befestigungspunkten.

5. Filterelement nach einem der vorhergehenden Ansprüche, **dadurch gekennzeichnet, dass** am jeweiligen Befestigungspunkt das Bimetallelement (36) mit seinem Rand in ein Halteteil (38) eingesetzt, eingeschoben oder eingerastet ist, und dass die Halteteile (38) den Fluidweg zumindest teilweise umgeben.

6. Filterelement nach einem der vorhergehenden Ansprüche, **dadurch gekennzeichnet, dass** Materialien, Form und Anordnung des Bimetallelements (36) derart gewählt sind, dass es bis zu einem Sperrzustand verformbar, insbesondere verbiegbar, ist, in welchem eine größtmögliche Sperrung des Fluidweges erreicht ist.

7. Filterelement nach einem der vorhergehenden Ansprüche, **dadurch gekennzeichnet, dass** das Bimetallelement (36) an einem der Deckteile (1, 3), vorzugsweise am in Gebrauchsstellung unteren Deckteil (3), angeordnet ist und vorzugsweise zumindest im Ausgangszustand über die Außenseite des Deckteils (1, 3), besonders bevorzugt mit einer Wölbung, übersteht.

8. Filterelement nach einem der vorhergehenden Ansprüche, **dadurch gekennzeichnet, dass** das Filtermaterial (10) in Form eines Hohlkörpers einen inneren, vorzugsweise hohlzylinderförmigen, Filterhohlraum (12) umgibt, der zwischen den Deckteilen (1, 3) angeordnet ist, die die Einfassung für die Stirnseiten des Hohlkörpers des Filtermaterials (10) bilden, dass der Filterhohlraum (12) die Filtratseite bildet und dass das Bypassventil (34), vorzugsweise in Form des Bimetallelements (36), an einer Durchgangsöffnung (32) am oberen (1) oder unteren Deckteil (3) in auf den Filterhohlraum (12) ausgerichteter Lage angeordnet ist.

## Claims

1. Filter element for filtering transmission oils, comprising a filter material (10) bordered by cover parts (1, 3), said filter material separating an unfiltered medium side from a filtrate side (12) during the filtration process, and comprising a bypass valve (34), which has a closing body (36) that closes or releases a fluid path bypassing the filter material (10) between the unfiltered medium side and the filtrate side (12) in a temperature-controlled manner, said closing body being formed by a temperature-sensitive component (36), which, dependent on temperature, moves into first and second form states, in which it closes or releases the bypassing fluid path respectively, the temperature-sensitive closing body being designed as a bimetallic element (36), around which, at least in an original form state, the oil to be filtered at least partially flows, and wherein the bimetallic element (36) is arranged concentrically in relation to the passage opening (32) and is deformed uniformly and radially symmetrically in relation to the axis of symmetry of the passage opening (32) and the bimetallic element (36), **characterised in that** the bimetallic element (36) is arranged on or in the filter housing in such a way that, in the original state, it allows oil to flow through at least one passage opening (32) assigned to the fluid path and, when deformed, reduces the oil throughflow, and **in that** the materials for the bimetallic element (36) are selected such that the bimetallic element (36) starts to deform from the original state to block the fluid path when a pre-definable threshold value for the oil temperature is exceeded.

2. Filter element according to claim 1, **characterised in that** the bimetallic element (36) is designed in the form of a washer, disc or plate.

3. Filter element according to either claim 1 or claim 2, **characterised in that** the bimetallic element (36) to block the fluid path at least partially comes into contact with the filter housing parts delimiting the passage opening (32).

4. Filter element according to any one of the preceding claims, **characterised in that** the edges of the bimetallic element (36) are arranged in a fixed position on or in the filter housing, preferably at attachment points provided at regular intervals on the edge of the bimetallic element (36).

5. Filter element according to any one of the preceding claims, **characterised in that** the edge of the bimetallic element (36) is inserted, pushed into or engaged into a holding part (38) at the respective fastening point, and **in that** the holding parts (38) at least partially surround the fluid path.

6. Filter element according to any one of the preceding claims, **characterised in that** the materials, form and arrangement of the bimetallic element (36) are selected such that it can be deformed, and in particular bent, to a blocking state in which a maximum possible blockage of the fluid path is achieved.

7. Filter element according to any one of the preceding claims **characterised in that** the bimetallic element (36) is arranged on one of the cover parts (1, 3), preferably on the lower cover part (3) in the usage position, and preferably, at least in the original state, protrudes above the outer side of the cover part (1, 3), more preferably with a curvature.

8. Filter element according to any one of the preceding claims, **characterised in that** the filter material (10), in the form of a hollow body, surrounds an inner, preferably hollow cylindrical filter cavity (12), which is arranged between the cover parts (1, 3) which form the surround for the end faces of the hollow body of the filter material (10), **in that** the filter cavity (12) forms the filtrate side and **in that** the bypass valve (34), preferably in the form of the bimetallic element (36), is arranged in a position aligned with the filter cavity (12) at a passage opening (32) on the upper (1) or lower cover part (3).

## Revendications

1. Elément de filtre pour la filtration d'huile de transmission comprenant une matière (10) filtrante enchâssée de parties (1, 3) de recouvrement, qui sépare lors de l'opération de filtration un côté de non filtrat d'un côté (12) de filtrat, et comprenant une soupape (34) de dérivation qui a un obturateur (36), lequel commandé en température ferme ou dégage un trajet de fluide, contournant la matière (10) filtrante, entre le côté de non filtrat et le côté (12) de filtrat, l'obturateur étant formé d'une pièce (36) sensible à la température qui, en fonction de la température, passe dans un premier et un deuxième état de forme, dans lesquels il ferme ou dégage le trajet de fluide contournant, l'obturateur sensible à la température étant constitué sous la forme d'un bilame (36) autour duquel, au moins dans un état de forme initial, l'huile à filtrer passe au moins en partie et le bilame (36) étant disposé concentriquement à l'ouverture (32) de passage et se déformant uniformément et à symétrie radiale par rapport à l'axe de symétrie de l'ouverture (32) de passage et du bilame (36), **caractérisé en ce que** le bilame (36) est monté sur ou dans l'enveloppe du filtre de manière à permettre dans l'état initial un passage de l'huile dans au moins une ouverture (32) de passage associée au trajet de fluide et, s'il se déforme, à réduire le passage d'huile et **en ce que** les matériaux du bilame (36) sont choisis de manière à ce que, si une valeur de seuil pouvant être donnée à l'avance de la température de l'huile est dépassée, commence une déformation du bilame (36) de l'état initial à l'obturation du trajet de fluide.

2. Elément de filtre suivant la revendication 1, **caractérisé en ce que** le bilame (36) est constitué sous la forme d'un disque, d'un plateau ou d'une plaque.

3. Elément de filtre suivant l'une des revendications 1 ou 2, **caractérisé en ce que** le bilame (36) vient, pour obturer le trajet de fluide, au moins en partie en contact avec des parties de l'enveloppe du filtre délimitant l'ouverture (32) de passage.

4. Elément de filtre suivant l'une des revendications précédentes, **caractérisé en ce que** le bilame (36) est monté en étant fixe du côté du bord sur ou dans l'enveloppe du filtre, de préférence en des points de fixation prévus à des distances régulières au bord du bilame (36).

5. Elément de filtre suivant l'une des revendications précédentes, **caractérisé en ce qu'**au point (1) de fixation respectif, le bilame (36) est inséré, enfoncé ou encliqueté dans une partie (38) de maintien et **en ce que** les parties (38) de maintien entourent le trajet de fluide au moins en partie.

6. Elément de filtre suivant l'une des revendications précédentes, **caractérisé en ce que** des matériaux, une forme et un agencement du bilame (36) sont choisis de manière à ce qu'il soit déformable, notamment cintrable, jusqu'à son état d'obturation, dans lequel une obturation aussi grande que possible du trajet de fluide est obtenue.

7. Elément de filtre suivant l'une des revendications précédentes, **caractérisé en ce que** le bilame (36) est monté sur l'une des parties (1, 3) de recouvrement, de préférence sur la partie (3) de recouvrement inférieure en position d'utilisation et, de préférence, au moins à l'état initial dépasse du côté extérieur de la partie (1, 3) de recouvrement, d'une manière particulièrement préférée avec une voussure.

8. Elément de filtre suivant l'une des revendications précédentes, **caractérisé en ce que** la matière (10) filtrante sous la forme d'un corps creux entoure une cavité (12) intérieure du filtre, de préférence en forme de cylindre creux, qui est disposée entre les parties (1, 3) de recouvrement formant l'enchâssement des côtés frontaux du corps creux de la matière (10) filtrante, **en ce que** la cavité (12) du filtre forme le côté du filtrat et **en ce que** la soupape (34) de dérivation est montée de préférence sous la forme du bilame (36) sur une ouverture (32) de passage à la partie (1) supérieure ou à la partie (3) inférieure de recouvrement en position dirigée sur la cavité (12) de filtre.
